# EUROPÄISCHE PATENTSCHRIFT

(11) **EP 3 303 940 B1**
(45) Veröffentlichungstag und Bekanntmachung des Hinweises auf die Patenterteilung: **17.04.2019**
(21) Anmeldenummer: 15727619.7
(22) Anmeldetag: 01.06.2015
(51) Int. Cl.: F24S 25/00, F24S 30/40

(54) **NACHFÜHRVORRICHTUNG**
TRACKING DEVICE
DISPOSITIF DE POURSUITE

(43) Veröffentlichungstag der Anmeldung: 11.04.2018
(73) Patentinhaber: Habdank PV-Montagesysteme GmbH & Co. KG, 73037 Göppingen (DE)
(72) Erfinder: HABDANK, Martin, 73092 Heiningen (DE)
(74) Vertreter: Ruckh, Rainer Gerhard
(86) Internationale Anmeldenummer: PCT/EP2015/062074
(87) Internationale Veröffentlichungsnummer: WO 2016/192766

(56) Entgegenhaltungen:
- WO-A2-2009/040065
- WO-A2-2013/190196
- FR-A1- 3 001 793
- GB-A- 2 235 786
- US-A- 4 515 148
- US-A1- 2014 338 659

## Beschreibung

Die Erfindung betrifft eine Nachführvorrichtung für Solarmodule gemäß dem Oberbegriff des Anspruchs 1.

Eine derartige Nachführvorrichtung ist aus der WO 2013/139745 A1 bekannt. Diese Nachführvorrichtung umfasst eine Reihe von jeweils entlang einer Hochachse orientierten Pfosten, wobei sich die Reihe entlang einer Längsachse erstreckt. An der Oberseite jedes Pfostens ist ein Querträger schwenkbar gelagert, wobei der Querträger versetzt zum Drehpunkt, das heißt der Schwenkachse angeordnet ist. Der Querträger kann zum Verschwenken einer Kippschiene, an der Solarmodule befestigt sind, rotiert werden. Diese Rotation erfolgt mittels einer Rotationseinheit auf der Oberseite eines Pfostens. Die Rotationseinheit umfasst ein Schneckengetriebe mit einem elektrischen Antrieb.

Die Nachführvorrichtung dient zur Ausrichtung der Solarmodule an den Sonnenstand. Bevorzugt wird hierzu die Schwenkachse der Solarmodule in Nord-Süd-Richtung ausgerichtet, so dass die Solarmodule durch die Schwenkbewegung von einer Ost-Ausrichtung in eine West-Ausrichtung und umgekehrt bewegt werden können.

Nachteilig bei dieser Nachführvorrichtung ist, dass der Schwenkmechanismus für die Solarmodule relativ aufwändig ist. Insbesondere ist nachteilig, dass bei Solarmodulanordnungen mit einer Vielzahl von Pfosten auch eine hohe Anzahl von Antrieben benötigt wird. Schließlich ist nachteilig, dass diese Antriebe oben auf den Pfosten sitzen, so dass diese für Installations-, Wartungs- und Reparaturarbeiten schwer zugänglich sind.

Die GB 2 235 786 A betrifft eine Spiegel-Konstruktion zum Reflektieren und Fokussieren von Sonnenstrahlung. Mit den an den Spiegeln reflektierten Sonnenstrahlen wird eine Flüssigkeit in einem Rohr erhitzt. Die Spiegel sind an Armen gelagert, die über Lager drehbar an Pfosten gekoppelt sind. An den Armen sind weiterhin bogenförmige Hilfskonstruktionen mit Aussenverzahnungen befestigt. Die Aussenverzahnungen sind im Eingriff mit Zahnrädern, wobei die Zahnräder auf einer gemeinsamen Antriebswelle angeordnet sind.

Die WO 2013/190 196 A2 betrifft einen Solartracker, bei welchem Solarmodule auf Längsträgern gelagert sind, wobei die Längsträger auf Quertägern aufsitzen, die auf Pfosten aufsitzen. An einem der Querträger ist ein Bogen gelagert, der eine Zahnung aufweist. Seitlich an einem Pfosten ist eine Welle mit einer Gewindespindel gelagert, welche in Eingriff mit der Zahnung des Bogens ist.

Der Erfindung liegt die Aufgabe zugrunde, eine Nachführvorrichtung der eingangs genannten Art so auszubilden, dass diese bei geringem konstruktivem Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft eine Nachführvorrichtung für Solarmodule mit einer Reihe von entlang einer Längsachse angeordneten Pfosten. An jedem Pfosten ist ein Querträger schwenkbar gelagert, wobei die Querträger um eine gemeinsame, parallel zur Längsachse verlaufende Schwenkachse schwenkbar sind. An jedem Querträger ist ein Zahnkranz befestigt, dessen Zahnung mit einem am jeweiligen Pfosten gelagerten, motorisch getriebenen Zahnrad in Eingriff ist. Weiterhin ist eine Zwangsführung vorgesehen, welche eine Sicherung gegen eine transversale Verschiebung des Zahnrads relativ zum Zahnkranz ausbildet. Jedes Zahnrad ist seitlich am jeweiligen Pfosten gelagert.

Die erfindungsgemäße Nachführvorrichtung zeichnet sich dadurch aus, dass diese einen konstruktiv einfachen und robusten Aufbau aufweist, so dass diese einerseits mit geringem Aufwand installiert und montiert werden kann und zudem auch bei äußeren Störeinflüssen zuverlässig funktioniert.

Ein wesentlicher Aspekt der Erfindung besteht in der seitlichen Anordnung der Zahnräder am Pfosten. Dies gewährleistet eine einfache und schnelle Montage des Antriebssystems an den Pfosten der Solarmodulanordnung.

Dies ergibt sich einerseits daraus, dass die Zahnräder nicht auf den Oberseiten der Pfosten angeordnet sind, sondern in erheblich niedrigeren Anbringhöhen, so dass diese vom Montagepersonal ohne Leitern oder dergleichen einfach zugänglich sind. Dieser Vorteil wird dadurch erhalten, dass jeder Zahnkranz an der Unterseite des jeweiligen Querträgers angeordnet ist. Entsprechend den Dimensionen des Zahnkranzes ist damit der Anbringungsort der Zahnräder am Pfosten nach unten versetzt.

Ein weiterer Vorteil der seitlichen Anbringung jedes Zahnrads am jeweiligen Pfosten besteht darin, dass Antriebsmittel, wie zum Beispiel eine das Zahnrad antreibende Welle, nicht durch den Pfosten geführt werden müssen, so dass sich entsprechende Eingriffe in den Pfosten erübrigen.

Besonders vorteilhaft sind die Zahnräder von einer gemeinsamen Welle durchsetzt, welche von einem zentralen Antrieb angetrieben ist.

Dabei verläuft die Welle neben dem Pfosten parallel zur Längsachse.

Vorteilhaft sind die Anordnungen des Zahnkranzes und des zugeordneten Zahnrads für alle Pfosten identisch ausgebildet.

Damit kann das gesamte Antriebssystem zur Nachführung der Solarmodule einfach an den Pfosten montiert werden.

Ein weiterer wesentlicher Aspekt der Erfindung besteht darin, dass jedes Zahnrad und der mit diesem in Eingriff stehende Bereich des Zahnkranzes durch eine Zwangsführung gegen transversale Verschiebungen gesichert ist. Damit wird auch bei Einfluss äußerer Störfaktoren ein einwandfreier Lauf des Zahnkranzes am Zahnrad erhalten, wodurch eine entsprechend zuverlässige Nachführbewegung der Solarmodule an den aktuellen Sonnenstand ermöglicht wird.

Gemäß einer ersten Variante weist die Zwangsführung zwei an gegenüberliegenden Seiten eines Zahnrads angeordnete Führungselemente auf, die in den Bereich des Zahnkranzes ragende Überstände aufweisen, welche spielarme Führungen für den Zahnkranz bilden.

Diese Variante hat den Vorteil, dass die Zwangsführung nur lokal im Bereich des Zahnrads angeordnet ist, so dass nur ein geringer Materialaufwand zur Ausbildung der Zwangsführung erforderlich ist.

Vorteilhaft ist jeder Zahnkranz kreisbogenförmig ausgebildet, wobei an seinem Außenumfang die Zahnung angeordnet ist.

Daran angepasst ist gemäß einer zweiten Variante die Zwangsführung von an den Außenumfang anschließenden Seitenwänden des Zahnkranzes anliegenden Führungssegmenten gebildet, welche sich in den Bereich des zugeordneten Zahnrads erstrecken und spielarme Führungen für dieses Zahnrad ausbilden.

Dabei erstrecken sich die Führungssegmente über die gesamte Länge des Zahnkranzes.

In diesem Fall erfüllt die Zwangsführung vorteilhaft eine Zusatzfunktion derart, dass sie eine Stabilisierung des Zahnkranzes bewirkt.

Dies ist insbesondere dann der Fall, wenn die Führungssegmente von an dem Zahnkranz befestigbaren Profilen gebildet sind.

Besteht der Zahnkranz aus einzelnen, zusammensetzbaren Zahnkranzsegmenten, so können die die Führungssegmente bildenden Profile dazu genutzt werden, die Zahnkranzsegmente miteinander form- und kraftschlüssig zu verbinden.

Alternativ sind die Führungssegmente einstückig mit dem Zahnkranz ausgebildet.

Vorteilhaft bildet dabei der Zahnkranz mit dem Führungssegment ein Profil aus.

Gemäß einer vorteilhaften Ausführungsform der Erfindung ist an jedem Pfosten ein gabelförmiger Gegenhalter befestigt, welcher ein Führungsmittel für den Zahnkranz bildet.

Damit wird ein ruhiger, gleichmäßiger Lauf des Zahnkranzes erreicht.

Zusätzlich oder alternativ kann hierfür auch an jedem Pfosten wenigstens eine Stützrolle zur Abstützung des Zahnkranzes vorgesehen sein.

Die Erfindung wird im Folgenden anhand der Zeichnungen erläutert. Es zeigen:
- Figur 1:: Ausführungsbeispiel der erfindungsgemäßen Nachführvorrichtung für eine Solarmodulanordnung.
- Figur 2:: Seitenansicht eines Pfostens sowie diesem zugeordneten Komponenten der Nachführvorrichtung gemäß Figur 1.
- Figur 3:: Perspektivische Ansicht der Anordnung gemäß Figur 2.
- Figur 4:: Einzeldarstellung eines Zahnkranzes für die Nachführvorrichtung gemäß Figur 1.
- Figur 4a:: Vergrößerte Darstellung eines Details von Figur 4.
- Figur 5:: Perspektivische Darstellung des Zahnkranzes gemäß Figur 4.
- Figur 5a:: Vergrößerte Darstellung eines Details von Figur 5.
- Figur 6:: Schnittdarstellung des Zahnkranzes gemäß den Figuren 4 und 5 mit einem zugeordneten Zahnrad.
- Figur 7:: Variante der Anordnung gemäß Figur 6.

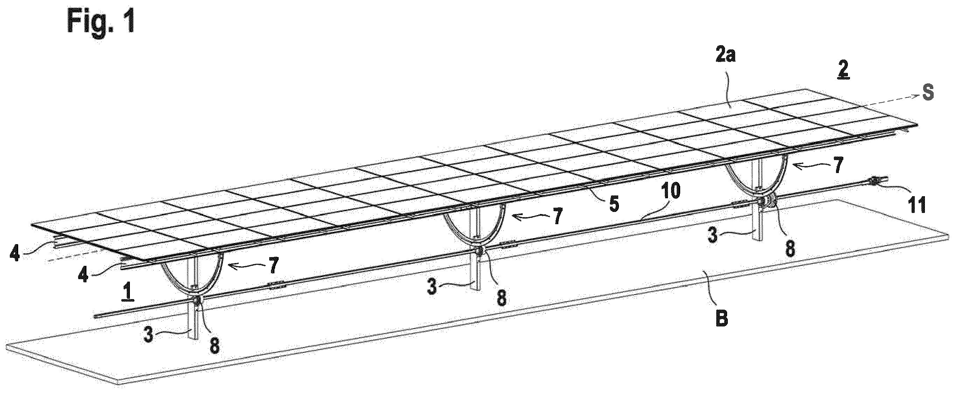

Figur 1 zeigt ein Ausführungsbeispiel der erfindungsgemäßen Nachführvorrichtung 1 für eine Solarmodulanordnung 2. Die Solarmodulanordnung 2 ist auf einer Tragkonstruktion gelagert, die im vorliegenden Fall drei identisch ausgebildete Pfosten 3 aufweist, die in einem Boden B verankert sind und deren Längsachsen jeweils in vertikaler Richtung orientiert sind. Die Posten 3 sind dabei äquidistant entlang einer Längsachse angeordnet, wobei die äquidistante Anordnung nicht zwingend ist.

Die identisch ausgebildeten, rechteckigen Solarmodule 2a der Solarmodulanordnung 2 sind auf zwei parallel laufenden, identisch ausgebildeten Längsträgern 4 gelagert. Dabei sind die Solarmodule 2a mit Modulträgern 5 auf diesen Längsträgern 4 gelagert. Die so gebildete Baueinheit bildet einen sogenannten Tisch. Generell kann die Anordnung von Figur 1 auch auf mehrere hintereinander angeordnete Tische erweitert sein, wobei die Pfosten 3 aller Tische entlang einer gemeinsamen Längsachse angeordnet sind.

Die Solarmodulanordnung 2 kann mittels der Nachführvorrichtung 1 um eine Schwenkachse S geschwenkt werden, die parallel zur Längsachse der Pfosten 3 verläuft. Vorteilhaft ist die Solarmodulanordnung 2 so installiert, dass die Schwenkachse S in Nord-Süd-Richtung verläuft. Damit kann mittels der Nachführvorrichtung 1 die Solarmodulanordnung 2 zwischen einer Ost- und einer Westausrichtung geschwenkt werden, wodurch diese an den aktuellen Sonnenstand angepasst werden kann.

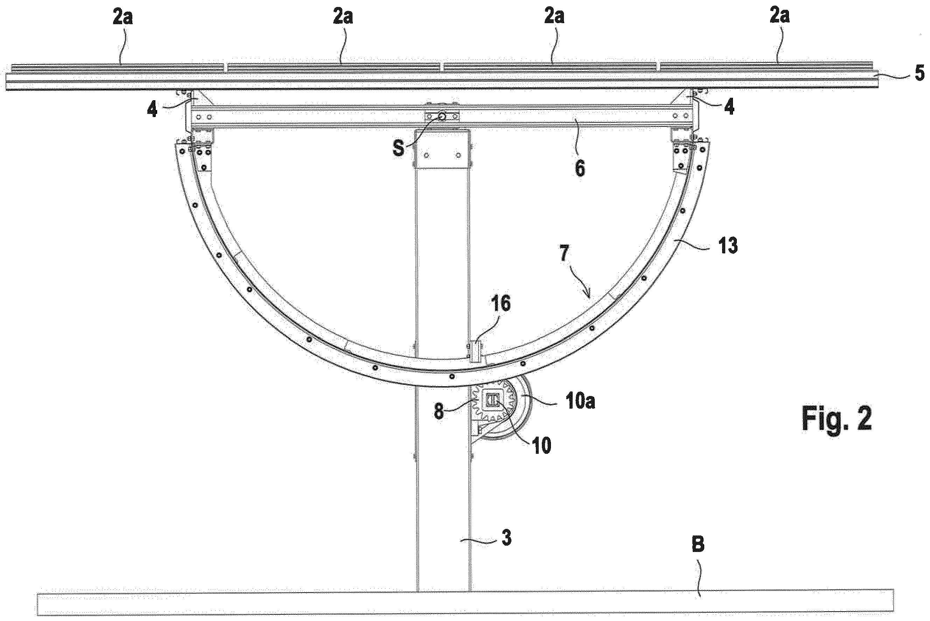

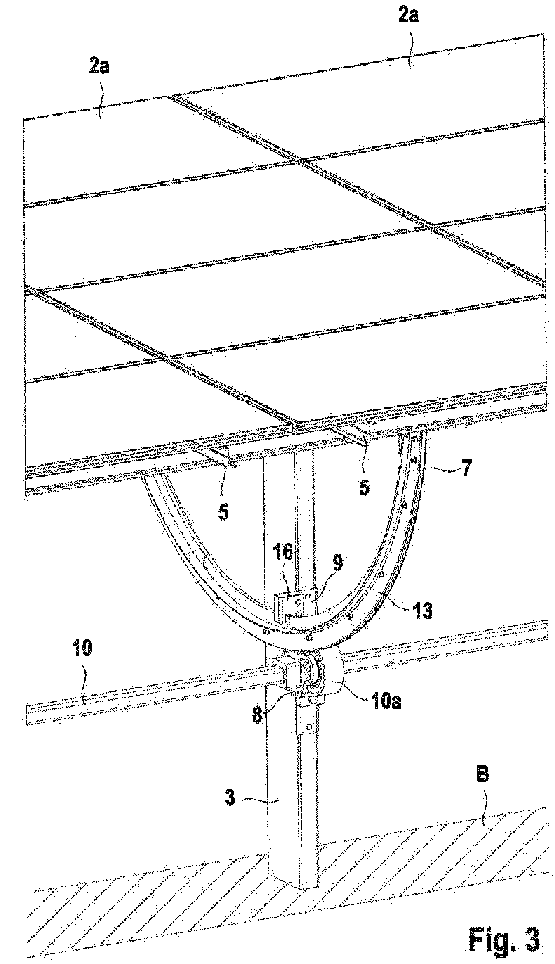

Die Komponenten der Nachführvorrichtung 1 sind aus Figur 1 sowie aus den Figuren 2 und 3, die einen einzelnen Pfosten 3 zeigen, ersichtlich. An jedem der Pfosten 3 sind in identischer Weise Komponenten der Nachführvorrichtung 1 vorgesehen.

Wie insbesondere aus Figur 2 ersichtlich, ist auf der Oberseite des Pfostens 3 ein Querträger 6 schwenkbar gelagert, wobei die Schwenkachse S durch das Zentrum des Querträgers 6 (senkrecht zur Zeichenebene) verläuft. Auf diesem Querträger 6 sind die Längsträger 4 gelagert.

Als Komponenten der Nachführvorrichtung 1 sind ein Zahnkranz 7 und ein Zahnrad 8 vorgesehen. Der einen halbkreisförmigen Bogen bildende Zahnkranz 7 ist an der Unterseite des Querträgers 6 im Bereich dessen längsseitiger Enden befestigt. Das dem Zahnkranz 7 zugeordnete Zahnrad 8 ist am Pfosten 3 befestigt. Hierzu ist, wie Figur 3 zeigt, eine das Zahnrad 8 aufnehmende Konsole 9 seitlich am Pfosten 3 befestigt, bevorzugt angeschraubt.

Der Zahnkranz 7 ist so dimensioniert, dass dessen unterster Punkt etwa auf halber Höher des Pfostens 3 liegt. In diesem Bereich ist auch das Zahnrad 8 so angeordnet, dass dessen Zähne im Eingriff mit der Zahnung 7a des Zahnkranzes 7 sind.

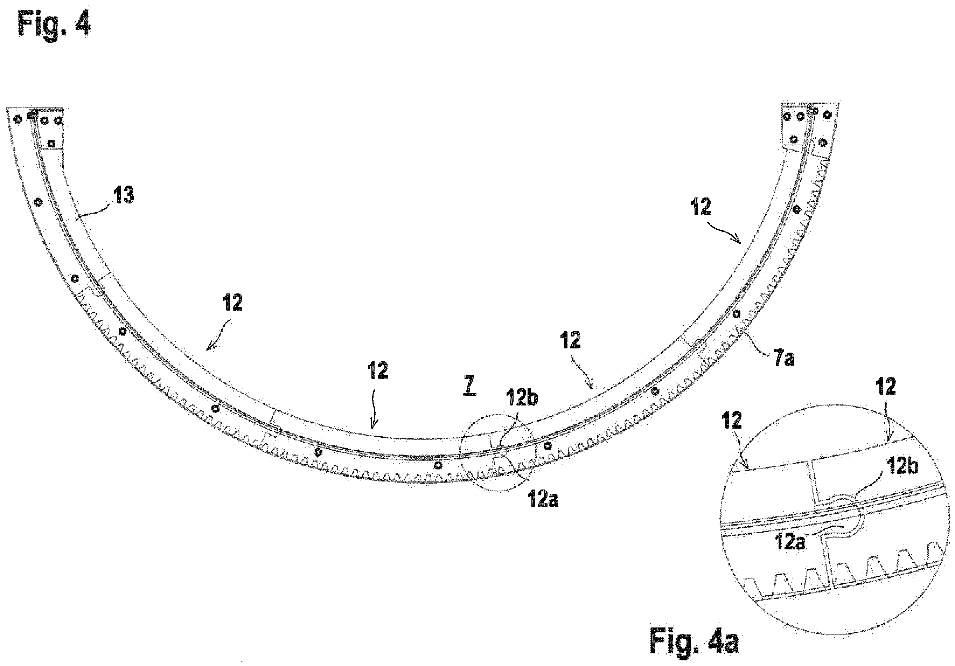

Wie aus der Einzeldarstellung des Zahnkranzes 7 von Figur 4 ersichtlich, befindet sich die Zahnung 7a am Außenumfang des Zahnkranzes 7.

Jedes Zahnrad 8 weist eine zentrale, nicht rotationssymmetrische Bohrung auf. Durch die Bohrungen sämtlicher Zahnräder 8 ist eine Welle 10 geführt, wobei die Zahnräder 8 auf der Welle 10 verdrehsicher gelagert sind. Die Welle 10 wird mit nur einem Antrieb 11 angetrieben, wobei der Antrieb 11 bei der Anordnung von Figur 1 am Ende der Welle 10 angeordnet ist. Die Welle 10 ist in Lagern 10a geführt, die an den Konsolen 9 der Pfosten 3 befestigt sind.

Mittels des Antriebs 11 wird die Welle 10 gedreht und damit simultan auch alle Zahnräder 8. Dadurch werden die Zahnkränze 7 entlang der Zahnräder 8 bewegt, wodurch die Querträger 6 simultan um die Schwenkachse S geschwenkt werden und damit die gesamte Solarmodulanordnung 2.

Bei einer Erweiterung der Anordnung gemäß Figur 1 auf mehrere Tische können sämtliche Zahnräder 8 aller Tische auf einer Welle 10 gelagert sein, so dass mit nur einem Antrieb 11 die Schwenkbewegung der Solarmodulanordnung 2 aller Tische durchgeführt werden kann. Vorteilhaft befindet sich dann der Antrieb 11 in der Mitte der Anordnung der Tische.

Wie aus Figur 4 ersichtlich, besteht der Zahnkranz 7 aus einer Mehrzahl von Zahnkranzsegmenten 12. Die Zahnkranzsegmente 12 weisen, wie Figur 4a detailliert zeigt, Laschen 12a beziehungsweise Ausnehmungen 12b an ihren längsseitigen Enden auf. Durch Einsetzen einer Lasche 12a an einem Ende eines Zahnkranzsegments 12 in die Ausnehmung 12b am längsseitigen Ende eines zweiten Zahnkranzsegments 12 werden die Zahnkranzsegmente 12 aneinander gekoppelt und in ihren Sollpositionen lagefixiert. Da, wie Figur 4a zeigt, jede Lasche 12a einen am Körper des Zahnkranzsegments 12 ausmündenden Hals aufweist, der schmaler ist als das anschließende Kopfteil, kann diese nicht durch Zug aus der an die Lasche 12a konturangepasste Ausnehmung 12b gelöst werden.

Um eine form- und kraftschlüssige Verbindung der Zahnkranzsegmente 12 zu erhalten, sind an beiden an die Zahnung 7a anschließenden Seitenwänden des Zahnkranzes 7 L-förmige Profile 13 befestigt (Figuren 2, 3, 4, 5, 5a, 6). Die Profile 13 bestehen bevorzugt wie auch die Zahnkranzsegmente 12 aus metallischen Gussteilen. Die beiden L-förmigen Profile 13 sind spiegelsymmetrisch zur Symmetrieachse des Zahnkranzes 7 ausgebildet. Die Profile 13 erstrecken sich jeweils über die gesamte Länge des Zahnkranzes 7. Die Profile 13 bestehen im vorliegenden Fall aus Profilstücken, die an den Zahnkränzen angeschraubt werden.

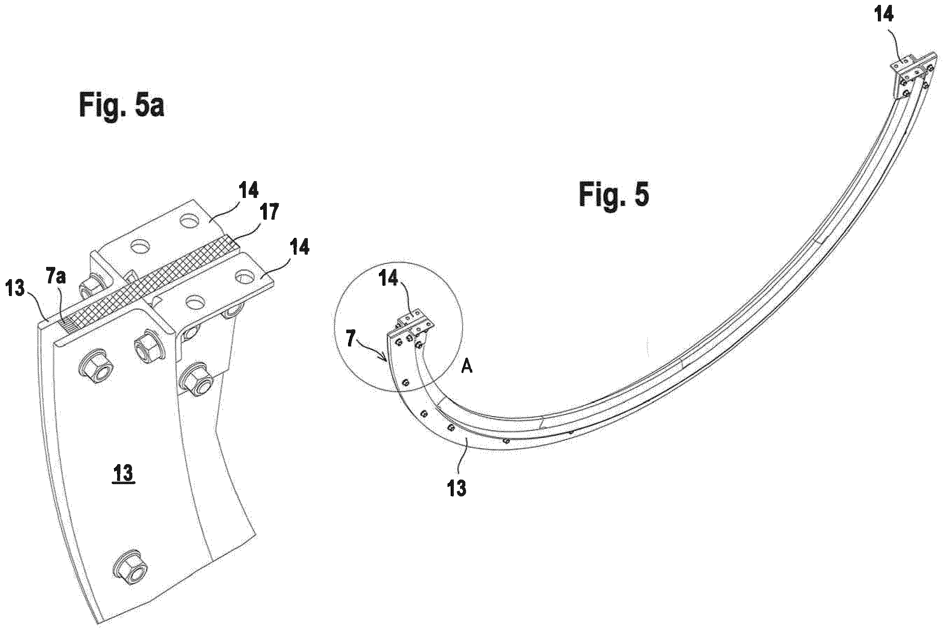

Wie insbesondere aus den Figuren 5, 5a ersichtlich, sind an den längsseitigen Enden der Profile 13 Aufnahmesegmente 14 vorgesehen, mit denen der Zahnkranz 7 mit den Profilen 13 an der Unterseite des Querträgers 6 angeschraubt werden kann.

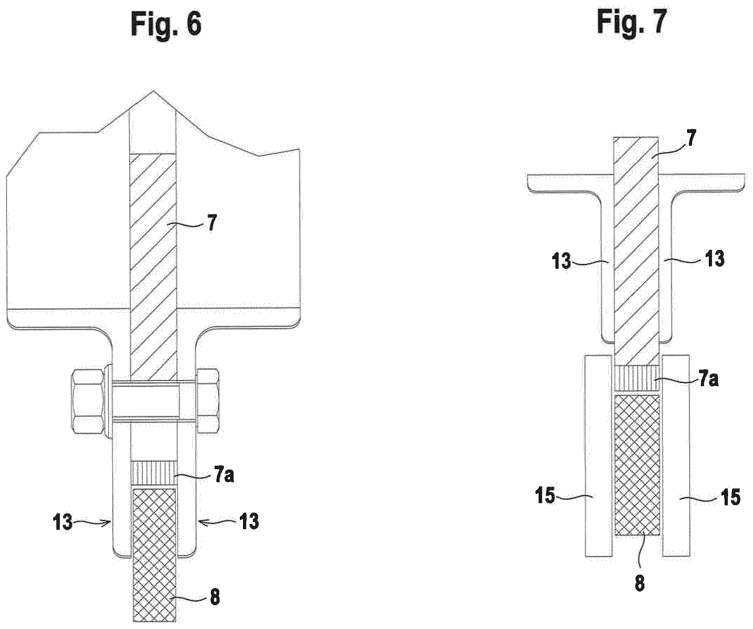

Wie insbesondere aus Figur 6 ersichtlich, stehen die am Zahnkranz 7 anschließenden Schenkel der L-förmigen Profile 13 über die Zahnung 7a des Zahnkranzes 7 hervor. Die über die Zahnung 7a hervorstehenden Segmente der Profile 13 bilden so Führungssegmente, die eine spielarme Führung für das Zahnrad 8 bilden. Damit wird eine Zwangsführung bereitgestellt, die das Zahnrad 8 und den Zahnkranz 7 gegen unerwünschte transversale Verschiebungen schützt.

Die Anordnung gemäß Figur 6 kann auch dahingehend weitergebildet sein, dass die Profile 13 und der Zahnkranz 7 einstückig ausgebildet sind und ein einziges Profil ausbilden.

Figur 7 zeigt eine Variante der Anordnung gemäß Figur 6. In diesem Fall sind die am Zahnkranz 7 anliegenden Schenkel der L-förmigen Profile 13 kürzer ausgebildet, so dass nun der untere Bereich des Zahnkranzes 7 mit der Zahnung 7a über diese Profile hervorsteht. Zur Ausbildung einer Zwangsführung sind seitlich am Zahnrad 8 zwei identisch ausgebildete scheibenförmige Führungselemente 15 vorgesehen. Diese Führungselemente 15 stehen in radialer Richtung über das Zahnrad 8 hervor. Die über das Zahnrad 8 hervorstehenden Bereiche der Führungselemente 15 bilden spielarme Führungen für den unteren Bereich des Zahnkranzes 7 mit der Zahnung 7a und sorgen so für eine Sicherung gegen eine transversale Verschiebung zwischen Zahnkranz 7 und Zahnrad 8.

Wie aus den Figuren 2 und 3 ersichtlich, ist an der an einem Pfosten 3 befestigten Konsole 9 ein gabelförmiger Gegenhalter 16 befestigt. In der gabelförmigen Aufnahme des Gegenhalters 16 ist die Oberseite des Zahnkranzes 7 spielarm geführt, wodurch der Zahnkranz 7 bei der Durchführung von Schwenkbewegungen gegen transversale Bewegungen gesichert ist.

Weiterhin können an der Konsole 9 auch nicht dargestellte Stützrollen vorgesehen sein, die den Zahnkranz 7 von unten abstützen und so für eine weitere Stabilisierung des Zahnkranzes 7 sorgen.

### Bezugszeichenliste

- (1): Nachführvorrichtung
- (2): Solarmodulanordnung
- (2a): Solarmodul
- (3): Pfosten
- (4): Längsträger
- (5): Modulträger
- (6): Querträger
- (7): Zahnkranz
- (7a): Zahnung
- (8): Zahnrad
- (9): Konsole
- (10): Welle
- (10a): Lager
- (11): Antrieb
- (12): Zahnkranzsegment
- (12a): Lasche
- (12b): Ausnehmung
- (13): Profil
- (14): Aufnahmesegment
- (15): Führungselement
- (16): Gegenhalter
- (B): Boden
- (S): Schwenkachse

## Patentansprüche

1. Nachführvorrichtung (1) für Solarmodule (2a) mit einer Reihe von entlang einer Längsachse angeordneten Pfosten (3), wobei an jedem Pfosten (3) ein Querträger (6) schwenkbar gelagert ist, wobei die Querträger (6) um eine gemeinsame, parallel zur Längsachse verlaufende Schwenkachse (S) schwenkbar sind, **dadurch gekennzeichnet, dass** an jedem Querträger (6) ein Zahnkranz (7) befestigt ist, dessen Zahnung (7a) mit einem am jeweiligen Pfosten (3) gelagerten, motorisch getriebenen Zahnrad (8) in Eingriff ist, dass eine Zwangsführung vorgesehen ist, welche eine Sicherung gegen eine transversale Verschiebung des Zahnrads (8) relativ zum Zahnkranz (7) ausbildet, und/oder dass jedes Zahnrad (8) seitlich am jeweiligen Pfosten (3) gelagert ist.

2. Nachführvorrichtung nach Anspruch 1, **dadurch gekennzeichnet, dass** die Zahnräder von einer gemeinsamen Welle (10) durchsetzt sind, welche von einem zentralen Antrieb (11) angetrieben ist.

3. Nachführvorrichtung nach Anspruch 2, **dadurch gekennzeichnet, dass** die Welle (10) neben dem Pfosten (3) parallel zur Längsachse verläuft.

4. Nachführvorrichtung nach einem der Ansprüche 1 bis 3, **dadurch gekennzeichnet, dass** die Anordnungen des Zahnkranzes (7) und des zugeordneten Zahnrads (8) für alle Pfosten (3) identisch ausgebildet sind.

5. Nachführvorrichtung nach einem der Ansprüche 1 bis 4, **dadurch gekennzeichnet, dass** die Zwangsführung zwei an gegenüberliegenden Seiten des Zahnrads (8) angeordnete Führungselemente (15) aufweist, die in den Bereich des Zahnkranzes (7) ragende Überstände aufweisen, welche spielarme Führungen für den Zahnkranz (7) bilden.

6. Nachführvorrichtung nach einem der Ansprüche 1 bis 5, **dadurch gekennzeichnet, dass** jeder Zahnkranz (7) kreisbogenförmig ausgebildet ist, wobei an seinem Außenumfang die Zahnung (7a) angeordnet ist.

7. Nachführvorrichtung nach Anspruch 6, **dadurch gekennzeichnet, dass** die Zwangsführung von an den Außenumfang anschließenden Seitenwänden des Zahnkranzes (7) anliegenden Führungssegmenten gebildet ist, welche sich in den Bereich des zugeordneten Zahnrads (8) erstrecken und spielarme Führungen für dieses Zahnrad (8) ausbilden.

8. Nachführvorrichtung nach Anspruch 7, **dadurch gekennzeichnet, dass** sich die Führungssegmente über die gesamte Länge des Zahnkranzes (7) erstrecken.

9. Nachführvorrichtung nach einem der Ansprüche 7 oder 8, **dadurch gekennzeichnet, dass** die Führungssegmente von an dem Zahnkranz (7) befestigbaren Profilen (13) gebildet sind.

10. Nachführvorrichtung nach Anspruch 9, **dadurch gekennzeichnet, dass** die Profile (13) L-förmig ausgebildet sind.

11. Nachführvorrichtung nach einem der Ansprüche 7 oder 8, **dadurch gekennzeichnet, dass** die Führungssegmente einstückig mit dem Zahnkranz (7) ausgebildet sind.

12. Nachführvorrichtung nach Anspruch 11, **dadurch gekennzeichnet, dass** der Zahnkranz (7) mit dem Führungssegment ein Profil (13) ausbildet.

13. Nachführvorrichtung nach einem der Ansprüche 1 bis 12, **dadurch gekennzeichnet, dass** an jedem Pfosten (3) ein gabelförmiger Gegenhalter (16) befestigt ist, welcher ein Führungsmittel für den Zahnkranz (7) bildet.

14. Nachführvorrichtung nach einem der Ansprüche 1 bis 13, **dadurch gekennzeichnet, dass** an jedem Pfosten (3) wenigstens eine Stützrolle zur Abstützung des Zahnkranzes (7) vorgesehen ist.

15. Nachführvorrichtung nach einem der Ansprüche 1 bis 14, **dadurch gekennzeichnet, dass** jeder Zahnkranz (7) aus einer Anzahl von form- und kraftschlüssig miteinander verbundenen Zahnkranzsegmenten (12) besteht.

## Claims

1. Tracking device (1) for solar modules (2a) with a row of posts (3) arranged along a longitudinal axis, wherein a transverse member (6) is pivotably mounted on each post (3) and wherein the transverse members (6) are pivotable about a common pivot axis (S) extending parallel to the longitudinal axis, **characterised in that** secured to each transverse member (6) is a gear rim (7), the toothing (7a) of which is in engagement with a motor-driven gearwheel (8) mounted at the respective post (3), that a constrained guide is provided which forms security against transverse displacement of the gearwheel (8) relative to the gear rim (7) and/or that each gearwheel (8) is mounted laterally on the respective post (3).

2. Tracking device according to claim 1, **characterised in that** the gearwheels are penetrated by a common shaft (10) which is driven by a central drive (11).

3. Tracking device according to claim 2, **characterised in that** the shaft (10) extends near the post (3) and parallel to the longitudinal axis.

4. Tracking device according to any one of claims 1 to 3, **characterised in that** the arrangements of the gear rim (7) and the associated gearwheel (8) are of identical construction for all posts (3).

5. Tracking device according to any one of claims 1 to 4, **characterised in that** the constrained guide comprise two guide elements (15) which are arranged at opposite sides of the gearwheel (8) and which have projections, which project into the region of the gear rim (7) and form low-play guides for the gear rim (7).

6. Tracking device according to any one of claims 1 to 5, **characterised in that** each gear rim (7) is arcuate, wherein the toothing (7a) is arranged at its outer circumference.

7. Tracking device according to claim 6, **characterised in that** the constrained guide is formed by guide segments bearing against side walls, which are connected with the outer circumference, of the gear rim (7), the guide segments extending in the region of the associated gearwheel (8) and forming low-play guides for this gearwheel (8).

8. Tracking device according to claim 7, **characterised in that** the guide segments extend over the entire length of the gear rim (7).

9. Tracking device according to one of claims 7 and 8, **characterised in that** the guide segments are formed by profile members (13) securable to the gear rim (7).

10. Tracking device according to claim 9, **characterised in that** the profile members (13) are formed to be L-shaped.

11. Tracking device according to one of claims 7 and 8, **characterised in that** the guide segments are formed integrally with the gear rim (7).

12. Tracking device according to claim 11, **characterised in that** the gear rim (7) together with the guide segment forms a profile member (13).

13. Tracking device according to any one of claims 1 to 12, **characterised in that** a forkshaped steady-holder (16) forming a guide means for the gear rim (7) is secured to each post (3).

14. Tracking device according to any one of claims 1 to 13, **characterised in that** at least one support roller for supporting the gear rim (7) is provided at each post (3).

15. Tracking device according to any one of claims 1 to 14, **characterised in that** each gear rim (7) consists of a number of gear rim segments (12) mechanically positively and frictionally connected together.

## Revendications

1. Dispositif de poursuite (1) pour modules solaires (2a) comportant une rangée de poteaux (3) disposés le long d'un axe longitudinal, une traverse (6) étant montée pivotante sur chaque poteau (3), les traverses (6) pouvant pivoter autour d'un axe de pivotement commun (S) s'étendant parallèlement à l'axe longitudinal, **caractérisé en ce que** sur chaque traverse (6) est fixée une couronne dentée (7) dont la denture (7a) est en prise avec une roue dentée motorisée (8) montée sur le poteau respectif (3), qu'il est prévu un guidage forcé qui constitue une protection contre un déplacement transversal de la roue dentée (8) par rapport à la couronne dentée (7) et/ou que chaque roue dentée (8) est montée latéralement sur le poteau respectif (3).

2. Dispositif de poursuite selon la revendication 1, **caractérisé en ce que** les roues dentées sont traversés par un arbre commun (10) qui est entraîné par un moyen d'entraînement central (11).

3. Dispositif de poursuite selon la revendication 2, **caractérisé en ce que** l'arbre (10) s'étend parallèlement à l'axe longitudinal à côté du poteau (3).

4. Dispositif de poursuite selon l'une des revendications 1 à 3, **caractérisé en ce que** les agencements de la couronne dentée (7) et de la roue dentée (8) associée sont identiques pour tous les poteaux (3).

5. Dispositif de poursuite selon l'une des revendications 1 à 4, **caractérisé en ce que** le guidage forcé présente deux éléments de guidage (15) disposés sur des côtés opposés de la roue dentée (8), qui présentent des débords qui font saillie dans la zone de la couronne dentée (7) et forment des guides à faible jeu pour la couronne dentée (7).

6. Dispositif de poursuite selon l'une des revendications 1 à 5, **caractérisé en ce que** chaque couronne dentée (7) est réalisée en forme d'arc de cercle, la denture (7a) étant disposée sur sa périphérie extérieure.

7. Dispositif de poursuite selon la revendication 6, **caractérisé en ce que** le guidage forcé est formé par des segments de guidage qui s'appuient contre des parois latérales de la couronne dentée (7) adjacentes à la périphérie extérieure, qui s'étendent dans la zone de la roue dentée (8) associée et constituent des guides à faible jeu pour cette roue dentée (8).

8. Dispositif de poursuite selon la revendication 7, **caractérisé en ce que** les segments de guidage s'étendent sur toute la longueur de la couronne dentée (7).

9. Dispositif de poursuite selon l'une des revendications 7 ou 8, **caractérisé en ce que** les segments de guidage sont formés par des profilés (13) pouvant être fixés sur la couronne dentée (7).

10. Dispositif de poursuite selon la revendication 9, **caractérisé en ce que** les profilés (13) sont réalisés en forme de L.

11. Dispositif de poursuite selon l'une des revendications 7 ou 8, **caractérisé en ce que** les segments de guidage sont formés d'une seule pièce avec la couronne dentée (7).

12. Dispositif de poursuite selon la revendication 11, **caractérisé en ce que** la couronne dentée (7) forme un profilé (13) avec le segment de guidage.

13. Dispositif de poursuite selon l'une des revendications 1 à 12, **caractérisé en ce qu'**un élément de retenue (16) en forme de fourche est fixé sur chaque poteau (3), lequel forme un moyen de guidage pour la couronne dentée (7).

14. Dispositif de poursuite selon l'une des revendications 1 à 13, **caractérisé en ce qu'**au moins un rouleau de support est prévu sur chaque poteau (3) pour supporter la couronne dentée (7).

15. Dispositif de poursuite selon l'une des revendications 1 à 14, **caractérisé en ce que** chaque couronne dentée (7) est constituée d'un certain nombre de segments de couronne dentée (12) qui sont reliés les uns aux autres par complémentarité de forme et par force.
